# EUROPEAN PATENT SPECIFICATION

(11) **EP 3 763 195 B1**
(45) Date of publication and mention of the grant of the patent: **24.11.2021**
(21) Application number: 20184710.0
(22) Date of filing: 08.07.2020
(51) Int. Cl.: A01D 87/12, B65B 69/00

(54) **ASSEMBLY OF A BALE CLAMP AND A CUTTING DEVICE**
ANORDNUNG EINER BALLENKLEMME UND EINER SCHNEIDVORRICHTUNG.
ASSEMBLAGE D'UNE PINCE À BALLES ET D'UN DISPOSITIF DE COUPE

(30) Priority: 12.07.2019 IT 201900011592
(43) Date of publication of application: 13.01.2021
(73) Proprietor: TVH Parts Holding nv, 8790 Waregem (BE)
(72) Inventor: ANTONIOTTI, Daniele, 28100 NOVARA (IT)
(74) Representative: Cardoen, Annelies Andréa C.

(56) References cited:
- AT-B- 399 253
- CH-A2- 709 487
- FR-A1- 3 002 110
- US-A1- 2018 155 894

## Description

The present invention relates to an assembly of a bale clamp and a cutting device for cutting through a wire that holds a bale together, wherein the bale clamp comprises a base frame which is provided to be connected to a vehicle, such as a forklift, two clamping elements which are movably connected to the base frame in such a way that the clamping elements are movable towards and from each other according to a first direction and driving means for moving the clamping elements towards and from each other, wherein the cutting device comprises one or more cutting elements for cutting through a wire, wherein the cutting device comprises a base section which is provided to be connected to the base frame in a fixed position for connecting the cutting device to the bale clamp, wherein at least one cutting element of the one or more cutting elements is movably connected to said base section for cutting a wire and wherein the said cutting device comprises driving means for moving said at least one cutting element and wherein in use the one or more cutting elements are located above the clamping elements according to a plane perpendicular to the first direction.

The invention also relates to a method for moving a bale to the desired position and cutting through a wire that holds said bale together.

Bale clamps are used to move bales to the desired position. These bales can be cylindrical bales or rectangular bales. This invention specifically relates to bale clamps that are provided to grasp rectangular bales, thus rectangular bale clamps. These bales can be cellulose-containing bales "cellulose packaging" which are obtained, for example, by compressing old paper, old cardboard, etc. To prevent these bales from falling apart, these bales are provided with one or more metal wires to hold these bales together. These bales are then transported with the aid of vehicle, such as forklift, with a bale clamp connected to it. If one then wishes to further process these bales, for example for the manufacture of recycled paper or cardboard, these one or more metal wires must be removed. Currently, the transport of the bales and the removal of the one or more wires is often done by two separate devices. The transport of the bales is done with the aid of a bale clamp and the cutting of the one or more wires is done with the aid of a cutting device, such as scissors that are operated manually. However, this is labour intensive and takes up a relatively long time.

To be able to move and cut through the one or more wires in a less labour intensive way and in less time, assemblies of a bale clamp and a cutting device have been constructed. For some assemblies, in use, the cutting device is connected to the bale clamp in such a way that the cutting elements of the cutting device are connected to the clamping elements. During the movement of the clamping elements towards each other to clamp a bale, the cutting elements come into contact with the one or more wires and cut through the said one or more wires. Here the cutting action is done during the clamping of the bale. The advantage of this is that it is no longer necessary to cut through the wires manually and the cutting of the one or more wires does not take up additional time. However these assemblies do have some drawbacks. Because the cutting is done during the clamping, this means that the bale is no longer held together by one or more wires when the clamping elements move from each other to release the bale. As a result, the bale can fall apart before this is desirable. For example, if one wants to place the bales in a collector of a recycling machine, parts of the bale can drop next to the collector. Also, the stacking of several such bales on top of each other in an orderly manner, is hindered by the bales which have fallen apart. Also with such assemblies, if one simply wants to move bales to another place, and this without cutting through the wires, one must first remove the cutting device from the bale clamp. This is cumbersome. Another drawback is that the bales need to be clamped in such a way that the one or more wires can be cut by the cutting elements, meaning that the bales need to clamped in a certain manner and the person that controls the bale clamp, for example the forklift driver if the bale clamp is connected to a forklift, needs to have some skills.

AT 399253 B describes assembly of a bale clamp and a cutting device, wherein the cutting device is inserted between the clamping elements of the bale clamp. Here the built-up of the assembly is quite cumbersome.

It is therefore an object of the invention to provide an assembly to transport bales and to cut through wires that hold said bales together, which does not have the abovementioned drawbacks.

The object of the invention is achieved by providing an assembly as described in paragraph 1 of this description wherein the one or more cutting elements comprise two cutting knives which are movably connected to the base section towards and from each other according to a cutting direction, wherein in use said cutting direction is virtually the said first direction.

Here the cutting device has driving means, such as hydraulic/electrical jacks or cylinders, for moving said at least one cutting element. The bale clamp also has driving means, such as hydraulic/electrical jacks or cylinders, for moving said clamping elements. This means that the movement of the clamping elements can be freely chosen and the movement of the at least one cutting element can be freely chosen. The clamping and the cutting can thus be done separately from each other. Off course, if this is desired, the clamping and the cutting can also be done simultaneously. For example, if the assembly is connected to a forklift, the forklift driver can choose to first clamp a bale, move said bale and release said bale in the desired position. After this the forklift driver can move the said at least one cutting element to cut through the one or more wires. This reduces the risk that the bale will fall apart when this is not desired. If the bales are stacked next to each other and on top of each other, the forklift driver simply places the bale in the desired position and moves the clamping elements from each other to release the bale. When the bale is released, the one or more wires are still intact such that the bale will not fall apart. After releasing the bale, the one or more wires are cut by the cutting device. Also it is possible to only move bales, since it is not obliged to cut through the one or more wires. Therefore the cutting device can stay connected to the bale clamp at all times. If the bale is clamped in an undesirable way to cut through the one or more wires, one can simply reposition the bale clamp and then cut through the one or more wires, this because the clamping and cutting do not have to be performed simultaneously.

Preferably both said driving means are fed by a vehicle, such as for example a forklift. The driving means can be for example fed by a distribution block of the forklift. The driving means are then preferably fed by the same distribution block and the movement of the said at least one cutting element can be adapted to the movement of the clamping elements. For example, one can use a computer program to adapt the movement of the at least one cutting device to the movement of the clamping elements in such a way that the at least one cutting element can be moved automatically when the clamping elements move from each other or are moved from each other to a certain position. This way the forklift driver does not have to perform an additional action to cut through the one or more wires. Of course one can also set up the assembly in such a way that the forklift driver controls the movement of the at least one cutting element independently of the movement of the clamping elements.

The one or more cutting elements are, in use, located above the clamping elements according to a plane perpendicular to the first direction. The bale clamp is normally connected to a forklift or similar in such a way that the first direction extends substantially parallel to the surface upon which the forklift moves. By having the cutting elements above the clamping elements, the clamping elements cannot hinder the movement of the cutting elements, such that the at least one cutting element is always able to move. Here one simply has to clamp a bale in such a way that part of the bale extends above the clamping elements, such that the one or more wires which have to be cut through, are situated at the height of the one or more cutting elements during or after the clamping of the bale by the clamping elements. Here the bales are preferably rectangular bales with one wire which extends around the bale according to a vertical plane. The bale can be a cellulose packaging of the following size: 900 mm (Base) X 1800 mm (height) X 1500 mm (length), and said bale can be hold together by one steel wire.

The one or more cutting elements comprise two cutting knives which are movably connected to the base section towards and from each other according to a cutting direction, wherein in use said cutting direction is virtually the said first direction. Preferably said two cutting knives are each movable with respect to the base section such that when the cutting knives move towards each other to cut a said wire, both cutting knives move towards said wire and cutting forces are applied to the wire at two opposite locations. The movement of the said cutting knives is preferably synchronously.

Further preferably the two cutting knives are provided to cut through a wire according to a cutting plane which extends perpendicular to a plane perpendicular to the cutting direction. Such an assembly is than suitable to cut through a wire of a bale which extends around the bale according to a vertical plane. In this way the cut is made according to a plane perpendicular to the axis of the wire, such that the wire is cut through in an efficient way.

Also preferably each cutting knife comprises a tempered cutting edge, wherein the cutting edges of the cutting knives are provided to substantially contact each for cutting through a wire. The cutting knifes can be made of rectified chrome-plated steel.

Also preferably, the cutting device comprises two holding elements, wherein the cutting knives are respectively connected to said holding elements in a fixed position, wherein each holding element is movably connected to the base section according to the cutting direction. With the aid of said holding elements, the cutting knives can be easily moved in the desired direction.

Further preferably, the base section comprises one or more connecting elements for connecting the cutting device to the base frame and one or more guiding elements, wherein the one or more guiding elements take up a fixed position with regard to the one or more connecting elements, wherein the holding elements are slidably connected to the respective guiding elements according to said cutting direction. With the aid of said guiding elements, the movement of the holding elements is guided and supported in such a way the holding elements are slidable with respect to the guiding elements according to said cutting direction, such that it can be ensured that the cutting knives perform the desired movement at all times.

Even more preferably, the one or more guiding elements comprise two rails wherein each holding element is slidably connected to a said respective rail and/or the one or more guiding elements comprise a shaft around which one or each holding element extends in a slidable manner. With the aid of rails and/or a shaft the movement of the holding elements is well supported. For example one can have two rails, one for each respective holding element, and one shaft, wherein the said rails extend in line with each other according to the cutting direction and the shaft extends, according to a direction perpendicular to the cutting direction, at a distance from the rails, such that the holding elements are well supported at all times at two places which lie at a distance from each other.

In a preferred embodiment the cutting device comprises coupling elements for coupling the driving means of the cutting device to a drive of a vehicle, such as a forklift, such that the said at least one cutting element is movable with the aid of said vehicle. Energy is then fed to the cutting device by the vehicle. The vehicle can be a forklift, a tractor, a telehandler, etc. For example, the forklift can have a motor and a distribution block to feed the cutting device. The energy can be electrical, thermal or hydraulical energy. Preferably the bale clamp also has coupling elements for coupling the driving means of said bale clamp to a drive of a vehicle. This way one does not have to provide the cutting device and/or the bale clamp with a separate motor and the driver of the vehicle can easily control the assembly.

In a specific embodiment the driving means of the cutting device comprise one or more hydraulic jacks for moving the said at least one cutting element.

In a preferred embodiment the cutting device comprises at least two cutting elements and at least one centering element for keeping the cutting elements aligned.

The goal of the invention is also achieved by providing a method for moving a bale to the desired position and cutting through a wire that holds said bale together, wherein an assembly of a bale clamp and a cutting device as described above is provided, wherein this method comprises the following steps:
- clamping the bale by moving the clamping elements towards each other at the height of the bale and this until the bale is clamped;
- moving the bale clamp to the desired position;
- moving the clamping elements from each other;
- cutting the wire with the cutting device.

The present invention is now explained in greater detail below with reference to the following detailed description of some preferred embodiments of an assembly and a method according to the present invention. The aim of this description is solely to give illustrative examples and indicate further advantages and particularities and thus cannot be interpreted as a limitation of the field of application of the invention or of the patent rights claimed in the claims.

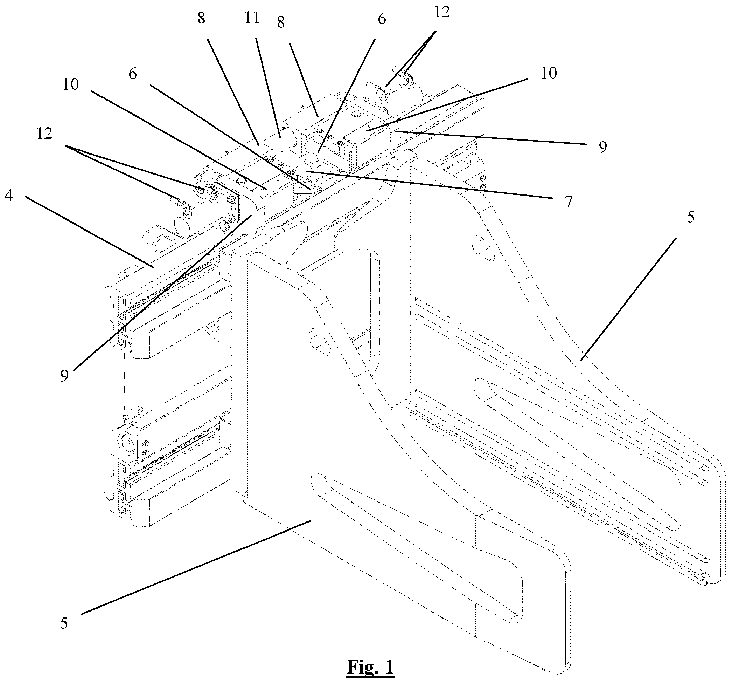

In this detailed description, reference is made by means of reference numerals to the appended drawings, wherein
- ***figure 1*** is a perspective view of an assembly of a bale clamp and a cutting device according to the invention;

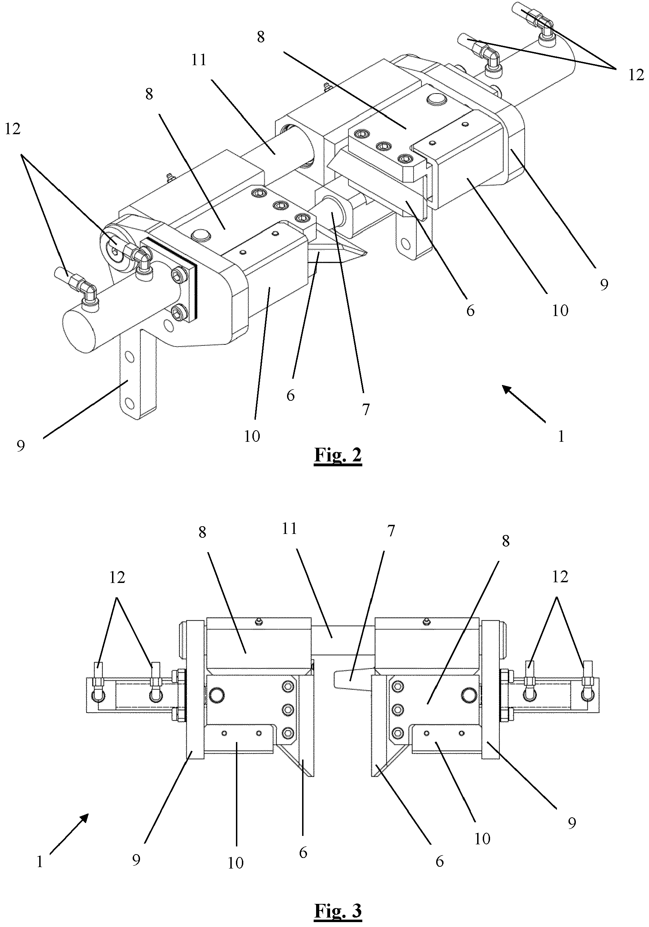

- ***figure 2*** is a perspective view of the cutting device shown in figure 1;
- ***figure 3*** is a top view of the cutting device shown in figure 2;
- ***figure 4*** is a perspective view of the assembly shown in figure 1, wherein a bale with a wire holding the bale together is clamped by the bale clamp;
- ***figure 5*** is a top view of the assembly shown in figure 1 and a bale with a wire holding the bale together, during the cutting of the wire by the cutting device;
- ***figure 6*** is a perspective view of a detail of figure 5.

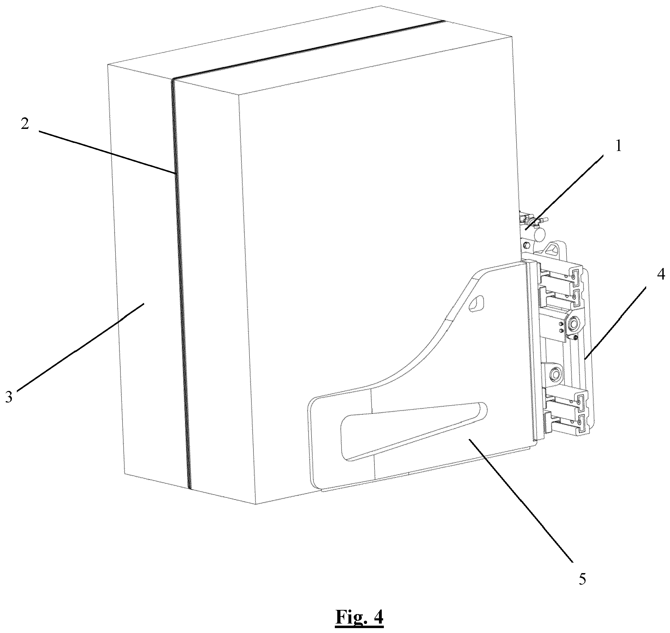

The figures show one embodiment of an assembly according to the invention. This assembly comprises a bale clamp and a cutting device (1) connected to the bale clamp. The bale clamp comprises a base frame (4) which is provided to be connected to a forklift, two clamping elements (5) which are movably connected to the base frame (4) in such a way that the clamping elements (5) are movable towards and from each other according to a first direction (A) and driving means for moving the clamping elements (5) towards and from each other. The bale clamp is provided to be connected to a fork lift in such a way that the driving means are driven with the aid of the forklift, such that the movement of the clamping elements (5) is controlled by the forklift driver. The bale clamp is a rectangular bale clamp which is provided to clamp rectangular bales (3) of certain dimensions. The bale (3) that is shown in the figures is a rectangular bale (3) comprising cellular compacted material with one steel wire (2) that holds the bale (3) together. This steel wire (2) is provided to extend according to an upright plane when it is clamped by the bale clamp. This can clearly be seen in the figures 4 to 6.

The cutting device (1) comprises two cutting knives (6) for cutting through a wire (2), holding elements (8) for holding said cutting knives (6) in a fixed position with regard to the holding element (8), a base section which is provided to be connected to the base frame (4) in a fixed position for connecting the cutting device (1) to the bale clamp, wherein each holding element (8) is movably connected to said base section according to a cutting direction (A), driving means for moving said holding elements (8) and coupling elements (12) for coupling the driving means of the cutting device (1) to a drive of a forklift. In use the cutting knives (6) are located above the clamping elements (5) according to a plane perpendicular to the first direction (A).

In use, thus when the cutting device (1) is connected to the bale clamp, the cutting direction (A) is the said first direction (A). The base section comprises two connecting elements (9) and three guiding elements (10, 11) namely two rails (10) and one shaft (11). The guiding elements (10, 11) take up a fixed position with regard to the connecting elements (9). The cutting device (1) is connected to the base frame (4) of the bale clamp with the aid of the connecting elements (9). The holding elements (8) are slidably connected to the respective guiding elements (10, 11) according to said cutting direction (A).

The two cutting knives (6) are provided to cut through a wire (2) according to a cutting plane which extends perpendicular to a plane perpendicular to the cutting direction (A) (see further). Each cutting knife (6) comprises a tempered cutting edge, wherein the cutting edges of the cutting knives (6) are provided to substantially contact each for cutting through a wire (2). Each holding element (8) is slidably connected to a said respective rail (10) and to the shaft (11).

The driving means of the cutting device (1) comprise two hydraulic jacks (13) for moving said respective holding elements (8) according to the cutting direction (A). The hydraulic jacks (13) are provided to be coupled to a forklift with the aid of the coupling elements (12), such that the said knives (6) are movable with the aid of a forklift.

The cutting device (1) also comprises a centering element (7) for keeping the cutting knives (6) aligned at all times.

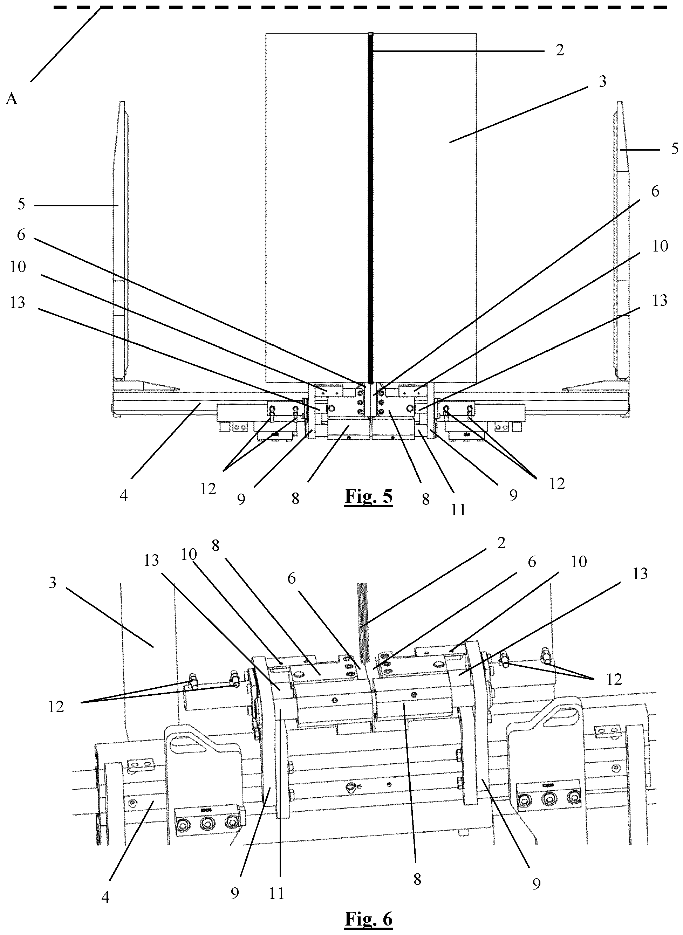

With the aid of this assembly a rectangular bale (3) that is held together by one steel wire (2), such as shown in the figures 4 to 6, can be moved to the desired location and also said steel wire (2) can be cut through such that said bale (3) can be further processed. For these actions, the assembly is connected to a forklift. To perform the abovementioned actions, the following steps are performed. The bale (3) is clamped by the bale clamp and this by moving the clamping elements (5) towards each other according to the first direction (A). The movement of the clamping elements (5) is controlled by the forklift driver. Once the bale (3) is clamped, the bale (3) is moved to the desired position by moving the forklift and/or by moving the bale clamp up and/or down. When the bale (3) is in the desired position, the clamping elements (5) move from each other such that the bale (3) is released. After this the knives (6) are moved towards each other according to the cutting direction (A), to cut the wire (2). The cutting edges of the knives (6) virtually touch each other such that the wire (2) is well cut. This can clearly be seen in figures 5 and 6. The movement of the knives (6), thus the movement of the holding elements (8) by the hydraulic jacks (13), is controlled by the forklift driver.

## Claims

1. Assembly of a bale clamp and a cutting device (1) for cutting through a wire (2) that holds a bale (3) together, wherein the bale clamp comprises a base frame (4) which is provided to be connected to a vehicle, such as a forklift, two clamping elements (5) which are movably connected to the base frame (4) in such a way that the clamping elements (5) are movable towards and from each other according to a first direction (A) and driving means for moving the clamping elements (5) towards and from each other, wherein the cutting device (1) comprises one or more cutting elements (6) for cutting through a wire (2), wherein the cutting device (1) comprises a base section which is provided to be connected to the base frame (4) in a fixed position for connecting the cutting device (1) to the bale clamp, wherein at least one cutting element (6) of the one or more cutting elements (6) is movably connected to said base section for cutting a wire (2) and wherein the said cutting device (1) comprises driving means for moving said at least one cutting element (6) and wherein in use the one or more cutting elements (6) are located above the clamping elements (5) according to a plane perpendicular to the first direction (A), **characterized in that** the one or more cutting elements (6) comprise two cutting knives (6) which are movably connected to the base section towards and from each other according to a cutting direction (A), wherein in use said cutting direction (A) is virtually the said first direction (A).

2. Assembly according to claim 1, **characterized in that** the two cutting knives (6) are provided to cut through a wire (2) according to a cutting plane which extends perpendicular to a plane perpendicular to the cutting direction (A).

3. Assembly according to claim 1 or 2, **characterized in that** the cutting device (1) comprises two holding elements (8), wherein the cutting knives (6) are respectively connected to said holding elements (8) in a fixed position, wherein each holding element (8) is movably connected to the base section according to the cutting direction (A).

4. Assembly according to claim 3, **characterized in that** the base section comprises one or more connecting elements (9) for connecting the cutting device (1) to the base frame (4) and one or more guiding elements (10, 11), wherein the one or more guiding elements (10, 11) take up a fixed position with regard to the one or more connecting elements (9), wherein the holding elements (8) are slidably connected to the respective guiding elements (10, 11) according to said cutting direction (A).

5. Assembly according claim 4, **characterized in that** the one or more guiding elements (10, 11) comprise two rails (10) wherein each holding element (8) is slidably connected to a said respective rail (10) and/or the one or more guiding elements (10, 11) comprise a shaft (11) around which one or each holding element (8) extends in a slidable manner.

6. Assembly according to any of the preceding claims, **characterized in that** the cutting device (1) comprises coupling elements (12) for coupling the driving means of the cutting device (1) to a drive of a vehicle, such as a forklift, such that the said at least one cutting element (6) is movable with the aid of said vehicle.

7. Assembly according to one of the preceding claims, **characterized in that** the driving means of the cutting device (1) comprise one or more hydraulic jacks (13) for moving the said at least one cutting element (6).

8. Assembly according to one of the preceding claims, **characterized in that** the cutting device (1) comprises at least two cutting elements (6) and at least one centering element (7) for keeping the cutting elements (6) aligned.

9. Method for moving a bale (3) to the desired position and cutting through a wire (2) that holds said bale (3) together, **characterized in that** an assembly of a bale clamp and a cutting device (1) as described in one or more of the claims 1 to 8 is provided, wherein this method comprises the following steps:
- clamping the bale (3) by moving the clamping elements (5) towards each other at the height of the bale (3) and this until the bale (3) is clamped;
- moving the bale clamp to the desired position;
- moving the clamping elements (5) from each other;
- cutting the wire (2) with the cutting device (1).

## Patentansprüche

1. Anordnung aus einer Ballenklammer und einer Schneidvorrichtung (1) zum Durchschneiden eines Drahts (2), der einen Ballen (3) zusammenhält, wobei die Ballenklammer einen Basisrahmen (4), der dazu vorgesehen ist, mit einem Fahrzeug wie einem Gabelstapler verbunden zu werden, zwei Klemmelemente (5), die beweglich so mit dem Basisrahmen (4) verbunden sind, dass die Klemmelemente (5) in eine erste Richtung (A) aufeinander zu und voneinander weg beweglich sind, und Antriebsmittel umfasst, um die Klemmelemente (5) aufeinander zu und voneinander weg zu bewegen, wobei die Schneidvorrichtung (1) ein oder mehrere Schneidelemente (6) zum Durchschneiden eines Drahts (2) umfasst, wobei die Schneidvorrichtung (1) einen Basisabschnitt umfasst, der dazu vorgesehen ist, mit dem Basisrahmen (4) in einer fixierten Position verbunden zu werden, um die Schneidvorrichtung (1) mit der Ballenklammer zu verbinden, wobei mindestens ein Schneidelement (6) des einen oder der mehreren Schneidelemente (6) zum Schneiden eines Drahts (2) beweglich mit dem Basisabschnitt verbunden ist und wobei die Schneidvorrichtung (1) Antriebsmittel zum Bewegen des mindestens einen Schneidelements (6) umfasst und wobei das eine oder die mehreren Schneidelemente (6) im Gebrauch in einer senkrecht zu der ersten Richtung (A) verlaufenden Ebene über den Klemmelementen (5) angeordnet sind, **dadurch gekennzeichnet, dass** das eine oder die mehreren Schneidelemente (6) zwei Schneidmesser (6) umfassen, die in einer Schneidrichtung (A) aufeinander zu und voneinander weg beweglich mit dem Basisabschnitt verbunden sind, wobei die Schneidrichtung (A) im Gebrauch praktisch die erste Richtung (A) ist.

2. Anordnung nach Anspruch 1, **dadurch gekennzeichnet, dass** die beiden Schneidmesser (6) dazu vorgesehen sind, einen Draht (2) gemäß einer Schneidebene durchzuschneiden, die sich senkrecht zu einer senkrecht zu der Schneidrichtung (A) verlaufenden Ebene erstreckt.

3. Anordnung nach Anspruch 1 oder 2, **dadurch gekennzeichnet, dass** die Schneidvorrichtung (1) zwei Halteelemente (8) umfasst, wobei die Schneidmesser (6) jeweils mit den Halteelementen (8) in einer fixierten Position verbunden sind, wobei jedes Halteelement (8) gemäß der Schneidrichtung (A) beweglich mit dem Basisabschnitt verbunden ist.

4. Anordnung nach Anspruch 3, **dadurch gekennzeichnet, dass** der Basisabschnitt ein oder mehrere Verbindungselemente (9), um die Schneidvorrichtung (1) mit dem Basisrahmen (4) zu verbinden, und ein oder mehrere Führungselemente (10, 11) umfasst, wobei das eine oder die mehreren Führungselemente (10, 11) bezüglich des einen oder der mehreren Verbindungselemente (9) eine fixierte Position einnehmen, wobei die Halteelemente (8) gemäß der Schneidrichtung (A) verschiebbar mit den jeweiligen Führungselementen (10, 11) verbunden sind.

5. Anordnung nach Anspruch 4, **dadurch gekennzeichnet, dass** das eine oder die mehreren Führungselemente (10, 11) zwei Schienen (10) umfassen, wobei jedes Halteelement (8) verschiebbar mit einer jeweiligen Schiene (10) verbunden ist und/oder das eine oder die mehreren Führungselemente (10, 11) eine Welle (11) umfassen, um die sich ein oder jedes Halteelement (8) verschiebbar erstreckt.

6. Anordnung nach einem der vorhergehenden Ansprüche, **dadurch gekennzeichnet, dass** die Schneidvorrichtung (1) Koppelelemente (12) zum Koppeln der Antriebsmittel der Schneidvorrichtung (1) an einen Antrieb eines Fahrzeugs wie eines Gabelstaplers umfasst, so dass das mindestens eine Schneidelement (6) mit Hilfe des Fahrzeugs beweglich ist.

7. Anordnung nach einem der vorhergehenden Ansprüche, **dadurch gekennzeichnet, dass** die Antriebsmittel der Schneidvorrichtung (1) zum Bewegen des mindestens einen Schneidelements (6) einen oder mehrere Hydraulikzylinder (13) umfassen.

8. Anordnung nach einem der vorhergehenden Ansprüche, **dadurch gekennzeichnet, dass** die Schneidvorrichtung (1) mindestens zwei Schneidelemente (6) und mindestens ein Zentrierelement (7) umfasst, um die Schneidelemente (6) ausgerichtet zu halten.

9. Verfahren zum Bewegen eines Ballens (3) zu der gewünschten Position und zum Durchschneiden eines Drahts (2), der den Ballen (3) zusammenhält, **dadurch gekennzeichnet, dass** eine Anordnung aus einer Ballenklammer und einer Schneidvorrichtung (1) nach einem der Ansprüche 1 bis 8 vorgesehen wird, wobei dieses Verfahren die folgenden Schritte umfasst:
- Klemmen des Ballens (3), indem die Klemmelemente (5) auf der Höhe des Ballens (3) aufeinander zu bewegt werden, bis der Ballen (3) geklemmt ist,
- Bewegen der Ballenklammer in die gewünschte Position,
- Bewegen der Klemmelemente (5) voneinander weg,
- Schneiden des Drahts (2) mit der Schneidvorrichtung (1).

## Revendications

1. Assemblage d'une pince à balles et d'un dispositif de coupe (1) pour sectionner un fil (2) qui maintient une balle (3) ensemble, la pince à balles comprenant un cadre de base (4) qui est fourni pour être relié à un véhicule, tel qu'un chariot élévateur à fourche, deux éléments de serrage (5) qui sont reliés de manière mobile au cadre de base (4) de sorte que les éléments de serrage (5) soient mobiles pour se rapprocher et s'éloigner l'un de l'autre selon une première direction (A) et un moyen d'entraînement pour déplacer les éléments de serrage (5) pour qu'ils se rapprochent et s'éloignent l'un de l'autre, le dispositif de coupe (1) comprenant un ou plusieurs éléments de coupe (6) pour sectionner un fil (2), le dispositif de coupe (1) comprenant une section de base qui est fournie pour être reliée au cadre de base (4) dans une position fixe pour relier le dispositif de coupe (1) à la pince à balles, au moins un élément de coupe (6) parmi le ou les éléments de coupe (6) étant relié de manière mobile à ladite section de base pour couper un fil (2) et ledit dispositif de coupe (1) comprenant un moyen d'entraînement pour déplacer ledit au moins un élément de coupe (6) et, lors de l'utilisation, le ou les éléments de coupe (6) étant situés au-dessus des éléments de serrage (5) selon un plan perpendiculaire à la première direction (A), **caractérisé en ce que** le ou les éléments de coupe (6) comprennent deux couteaux de coupe (6) qui sont reliés de manière mobile à la section de base pour se rapprocher et s'éloigner l'un de l'autre selon une direction de coupe (A), lors de l'utilisation, ladite direction de coupe (A) étant virtuellement ladite première direction (A).

2. Assemblage selon la revendication 1, **caractérisé en ce que** les deux couteaux de coupe (6) sont fournis pour sectionner un fil (2) selon un plan de coupe qui s'étend perpendiculairement à un plan perpendiculaire à la direction de coupe (A).

3. Assemblage selon la revendication 1 ou 2, **caractérisé en ce que** le dispositif de coupe (1) comprend deux éléments de maintien (8), les couteaux de coupe (6) étant respectivement reliés auxdits éléments de maintien (8) dans une position fixe, chaque élément de maintien (8) étant relié de manière mobile à la section de base selon la direction de coupe (A).

4. Assemblage selon la revendication 3, **caractérisé en ce que** la section de base comprend un ou plusieurs éléments de liaison (9) pour relier le dispositif de coupe (1) au cadre de base (4) et un ou plusieurs éléments de guidage (10, 11), le ou les éléments de guidage (10, 11) prenant une position fixe par rapport à l'élément ou aux éléments de liaison (9), les éléments de maintien (8) étant reliés de manière coulissante aux éléments de guidage (10, 11) respectifs selon ladite direction de coupe (A).

5. Assemblage selon la revendication 4, **caractérisé en ce que** le ou les éléments de guidage (10, 11) comprennent deux rails (10), chaque élément de maintien (8) étant relié de manière coulissante à un rail (10) respectif et/ou le ou les éléments de guidage (10, 11) comprenant un arbre (11) autour duquel un ou chaque élément de maintien (8) s'étend de manière coulissante.

6. Assemblage selon l'une quelconque des revendications précédentes, **caractérisé en ce que** le dispositif de coupe (1) comprend des éléments d'accouplement (12) pour accoupler le moyen d'entraînement du dispositif de coupe (1) à un entraînement d'un véhicule, tel qu'un chariot élévateur, de sorte que ledit au moins un élément de coupe (6) soit mobile à l'aide dudit véhicule.

7. Assemblage selon l'une des revendications précédentes, **caractérisé en ce que** le moyen d'entraînement du dispositif de coupe (1) comprend un ou plusieurs vérins hydrauliques (13) pour déplacer ledit au moins un élément de coupe (6).

8. Assemblage selon l'une des revendications précédentes, **caractérisé en ce que** le dispositif de coupe (1) comprend au moins deux éléments de coupe (6) et au moins un élément de centrage (7) pour maintenir les éléments de coupe (6) alignés.

9. Procédé pour déplacer une balle (3) à la position souhaitée et sectionner un fil (2) qui maintient ladite balle (3) ensemble, **caractérisé en ce qu'**un assemblage d'une pince à balles et d'un dispositif de coupe (1) selon une ou plusieurs des revendications 1 à 8 est fourni, ce procédé comprenant les étapes consistant à :
serrer la balle (3) en déplaçant les éléments de serrage (5) les uns vers les autres à la hauteur de la balle (3) et ce jusqu'à ce que la balle (3) soit serrée ;
déplacer la pince à balles à la position souhaitée ;
déplacer les éléments de serrage (5) à l'opposé les uns des autres ;
couper le fil (2) avec le dispositif de coupe (1).
